# FASCICULE DE BREVET EUROPEEN

(11) **EP 3 234 443 B1**
(45) Date de publication et mention de la délivrance du brevet: **20.04.2022**
(21) Numéro de dépôt: 15820493.3
(22) Date de dépôt: 18.12.2015
(51) Int. Cl.: F17C 11/00

(54) **RESERVOIR DE STOCKAGE D'HYDROGENE A HYDRURES METALLIQUES COMPRENANT PLUSIEURS ÉTAGES EMBOITÉS**
METALLHYDRIDWASSERSTOFFSPEICHERTANK MIT MEHREREN GESTAPELTEN EBENEN
METAL HYDRIDE HYDROGEN STORAGE TANK COMPRISING A PLURALITY OF STACKED LEVELS

(30) Priorité: 19.12.2014 FR 1462908
(43) Date de publication de la demande: 25.10.2017
(73) Titulaire: Commissariat à l'Énergie Atomique et aux Énergies Alternatives, 75015 Paris (FR)
(72) Inventeur: GILLIA, Olivier, 38360 Sassenage (FR); CHAISE, Albin, 38000 Grenoble (FR)
(74) Mandataire: Brevalex
(86) Numéro de dépôt international: PCT/EP2015/080529
(87) Numéro de publication internationale: WO 2016/097309

(56) Documents cités:
- EP-A2- 2 492 575
- WO-A1-01/81850
- WO-A1-2007/124825
- WO-A1-2016/075100
- FR-A1- 2 996 628
- JP-U- S59 183 600
- US-A1- 2002 006 365

## Description

### DOMAINE TECHNIQUE ET ART ANTÉRIEUR

La présente invention se rapporte à un réservoir de stockage d'hydrogène à hydrures métalliques offrant un chargement en hydrogène amélioré.

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme comprimée entre 350 et 700 bars. Il faut alors prévoir des réservoirs aptes à tenir ces pressions, sachant par ailleurs que ces réservoirs, lorsqu'ils sont montés dans des véhicules, peuvent être soumis à des chocs.

Il peut être stocké sous forme liquide, cependant ce stockage n'assure qu'un faible rendement de stockage et ne permet pas le stockage sur de longues durées. Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène dit « solide » sous la forme d'hydrure. Ce stockage autorise une densité volumique de stockage importante et met en œuvre une pression modérée d'hydrogène tout en minimisant l'impact énergétique du stockage sur le rendement global de la chaine hydrogène, i.e. de sa production à sa conversion en une autre énergie.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante :
Stockage : chaleur libérée (exothermique) 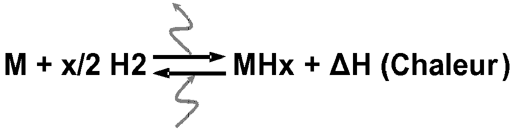
Déstockage: Chaleur à fournir (endothermique)
   - M étant la poudre ou matrice métallique,
   - MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

En outre, le matériau en absorbant l'hydrogène voit son volume augmenter.

Lorsque le matériau absorbe de l'hydrogène, il y a dégagement de chaleur, la pression d'équilibre, c'est-à-dire la pression au-delà de laquelle le matériau se charge en hydrogène, augmente, elle arrive rapidement au niveau de la pression d'alimentation en hydrogène, ce qui a pour effet de bloquer la réaction d'hydruration. Afin de lutter contre ce phénomène qui est néfaste à un chargement rapide du réservoir, il est nécessaire de refroidir le matériau. A l'inverse, dans le sens de la libération de l'hydrogène, un apport de chaleur doit avoir lieu afin d'augmenter la pression d'équilibre et de disposer d'une source de pression au dessus de la pression que l'on souhaite avoir en sortie de réservoir. Il est alors prévu des moyens pour assurer des échanges de chaleur entre le matériau à l'intérieur du réservoir et une source froide ou une source chaude suivant qu'il s'agisse d'une phase de charge ou de décharge.

Il existe un premier type de réservoirs dans lequel ces échanges de chaleur sont obtenus par la mise en œuvre de la circulation d'un caloporteur, tel que de l'eau, dans un circuit séparé de manière étanche de l'hydrure.

Il existe un deuxième type de réservoirs dans lequel ces échanges de chaleur sont obtenus en utilisant directement l'hydrogène comme fluide caloporteur. De l'hydrogène refroidi est injecté en phase absorption de l'hydrogène. Une partie de l'hydrogène injecté va balayer un certain volume du réservoir et va extraire de la chaleur et va ensuite ressortir du réservoir pour être refroidit pour être à nouveau réinjecté dans le réservoir. Eventuellement en phase de désorption, de l'hydrogène chauffé est injecté dans le réservoir de l'hydrogène contenu dans les hydrures. Il va apporter de la chaleur et va ensuite ressortir du réservoir pour être chauffé ou refroidit pour être à nouveau réinjecté dans le réservoir. En phase de désorption, il sort du réservoir plus d'hydrogène que la quantité injectée et en phase d'absorption il sort moins d'hydrogène que la quantité injectée. En général la part d'hydrogène désorbée ou absorbée est faible par rapport à la quantité d'hydrogène injecté dans le réservoir en vue des échanges thermiques.

Le document WO01/81850 décrit un exemple de réservoir de stockage d'hydrogène sous forme d'hydrure dans lequel le refroidissement en phase d'absorption est obtenu en injectant de l'hydrogène.

La structure interne du réservoir comporte des plaques de stockage d'hydrogène disposées les unes au dessus des autres et des canaux entre les plaques permettant l'écoulement de l'hydrogène entre les plaques afin de réaliser un refroidissement convectif des plaques. L'hydrogène est injecté dans le réservoir au niveau d'une première extrémité longitudinale de celui-ci et est collecté au niveau d'une deuxième extrémité longitudinale opposée à la première extrémité. L'hydrogène s'écoule de la première extrémité longitudinale, dans les canaux puis vers la deuxième extrémité longitudinale et sort du réservoir. La chaleur produite lors de l'absorption est produite au sein de l'hydrure, la chaleur doit donc atteindre les surfaces des plaques pour pouvoir être évacuée par le flux d'hydrogène. L'évacuation de la chaleur est donc relativement lente, ce qui réduit la cinétique de la réaction d'absorption. Afin d'augmenter la cinétique d'absorption, un débit important d'hydrogène doit être utilisé. Les document JP S59-183600U et EP2492575A2 décrivent un réservoir de stockage d'hydrogène avec plusieurs zones de stockage placées en série.

### EXPOSÉ DE L'INVENTION

C'est par conséquent un but de la présente invention d'offrir un dispositif de stockage d'hydrogène à caloporteur hydrogène de construction simple et offrant une cinétique de charge sensiblement augmentée par rapport aux dispositifs de l'état de la technique.

Le but précédemment énoncé est atteint par un réservoir de matériau de stockage comportant une enceinte et une structure interne délimitant une pluralité d'étages dans lesquels est stocké le matériau de stockage en hydrogène sous forme de lit, chaque étage comportant en amont du matériau de stockage, en considérant le sens d'écoulement de l'hydrogène, une zone de distribution de l'hydrogène dans le matériau de stockage et en aval du matériau de stockage une zone de collecte de l'hydrogène, de sorte à forcer l'hydrogène à traverser le lit de matériau de stockage sur toute son épaisseur. Un refroidissement ou un chauffage à cœur du matériau de stockage en hydrogène est ainsi assuré. En outre le refroidissement ou le chauffage est homogène dans tout le lit de matériau de stockage en hydrogène. De plus, chacun des étages est alimenté en hydrogène en parallèle, ainsi tous les lits sont traversés par des flux d'hydrogène ayant sensiblement la même température et tous les étages peuvent échanger sensiblement la même quantité de chaleur.

En d'autres termes, le réservoir comporte une structure interne stratifiée comprenant un réseau de distribution et de collecte en parallèle de l'hydrogène forçant l'hydrogène à percoler à travers les pores du milieu granulaire que forme le matériau de stockage.

Dans un exemple de réalisation, la structure interne est formée de coupelles, chaque étage comportant trois coupelles, l'une pour l'alimentation en hydrogène, l'une contenant le matériau de stockage en hydrogène et l'autre pour la collecte de l'hydrogène. Des zones perméables à l'hydrogène permettent la circulation de l'hydrogène dans la coupelle contenant le matériau de stockage en hydrogène et des zones imperméables à l'hydrogène imposent à l'hydrogène de traverser le matériau de stockage en hydrogène.

On assure ainsi que quasiment tout l'hydrogène introduit dans le réservoir entre en contact avec le matériau de stockage en hydrogène.

Dans un autre exemple de réalisation, les zones de distribution sont partagées entre un étage inférieur et un étage supérieur, ainsi que les zones de collecte.

La présente invention a alors pour objet un réservoir de stockage de l'hydrogène par absorption dans un matériau de stockage en poudre de l'hydrogène, comportant :
- une enceinte,
- au moins une entrée d'alimentation en hydrogène,
- au moins une sortie d'évacuation l'hydrogène,
- une structure interne pour stocker du matériau de stockage de l'hydrogène, ladite structure interne comportant un empilement selon un axe longitudinal d'au moins deux étages destinés à contenir du matériau de stockage,
   chaque étage comportant une zone de réception du matériau de stockage, une zone distributrice d'hydrogène et une zone collectrice d'hydrogène situées de part et d'autre de la zone de réception le long de l'axe longitudinal,
   des moyens de distribution en parallèle de l'hydrogène dans les zones distributrices de sorte que, pour chaque étage, un flux d'hydrogène circule de chaque zone distributrice vers la zone collectrice en traversant la zone de réception du matériau de stockage.

Par exemple, les moyens de distribution de l'hydrogène dans les zones distributrices comportent un conduit de distribution connecté par une extrémité longitudinale à l'entrée d'alimentation et fermé à une autre extrémité longitudinal, ledit conduit de distribution traversant ou bordant toutes les zones et comportant des ouvertures débouchant dans les zones distributrices.

Le réservoir de stockage comporte de préférence des moyens connectant toutes les zones collectrices à la sortie d'évacuation.

Dans un exemple de réalisation, chaque étage comporte sa zone distributrice et sa zone collectrice.

Chaque étage peut comporter une coupelle distributrice, une coupelle de réception du matériau de stockage et une coupelle collectrice, lesdites coupelles distributrices, de réception et collectrices étant superposées dans cet ordre et solidarisées les unes aux autres de manière étanche.

Par exemple, la coupelle de réception est emboîtée serrée dans la coupelle distributrice et la coupelle collectrice est emboîtée serrée dans la coupelle collectrice. Par exemple également, les étages sont emboîtés serrés les uns dans les autres, la coupelle distributrice d'un étage supérieur étant emboîtée serrée dans une coupelle collectrice d'un étage inférieur.

La coupelle distributrice peut comporter un fond étanche à l'hydrogène et une paroi latérale étanche à l'hydrogène et/ou la coupelle de réception peut comporter un fond au moins en partie perméable à l'hydrogène et étanche au matériau de stockage en poudre et une paroi latérale étanche à l'hydrogène et/ou la coupelle collectrice comporte un fond au moins en partie perméable à l'hydrogène et une paroi latérale étanche à l'hydrogène.

Selon une caractéristique additionnelle, les moyens connectant les coupelles collectrices à la sortie d'évacuation peuvent comporter au moins un conduit de collecte longitudinal traversant tous les coupelles et comportant des ouvertures débouchant dans chacune des coupelles collectrices.

De manière avantageuse, le conduit de distribution et/ou le conduit de collecte comportent des sections de conduits appartenant aux coupelles distributrices, aux coupelles de réception et aux coupelles collectrices, lesdites sections de conduits étant mises bout à bout lors de superposition des coupelles distributrices, des coupelles de réception et des coupelles collectrices.

Dans un autre exemple de réalisation, le réservoir comporte une zone distributrice pour deux étages et une zone collectrice pour deux étages.

Les zones distributrices peuvent déboucher dans un conduit de distribution longitudinal connecté à l'entrée d'alimentation et les zones collectrices peuvent déboucher dans un canal périphérique délimité par l'enceinte et la structure interne, ledit canal périphérique étant connecté à la sortie d'évacuation. Alternativement, les zones distributrices peuvent déboucher dans un canal périphérique délimité par l'enceinte et la structure interne, et les zones collectrices peuvent déboucher dans un conduit de distribution longitudinal connecté à la sortie d'évacuation ledit canal périphérique étant connecté à l'entrée d'alimentation.

De préférence, les zones distributrices et/ou les zones collectrices comportent une structure perméable à l'hydrogène et formant entretoise entre deux fonds de deux zones de réception successives. Ladite structure est par exemple un matériau poreux, une mousse, un fritté poreux ou comporte une ou plusieurs grilles.

Le réservoir peut comporter un empilement dans lequel alternent des éléments d'un premier type et des éléments d'un deuxième type, les éléments du premier type et les éléments du deuxième type étant solidarisés entre eux, les zones distributrices et les zones collectrices étant formées entre un élément du premier type et un élément du deuxième type.

Par exemple, les éléments du premier type et les éléments du deuxième type comprennent des parois latérales étanches à l'hydrogène et des fonds au moins perméables à l'hydrogène.

Selon une caractéristique additionnelle, les éléments du premier type et les éléments du deuxième type peuvent être solidarisés les uns aux autres de manière étanche sauf au niveau des connexions entre les zones distributrices et le conduit de distribution et des connexions entre les zones collectrices et le canal de collecte. Les éléments du premier type et les éléments du deuxième type peuvent être emboîtés les uns dans les autres et des joints d'étanchéité peuvent être prévus entre les éléments du premier type et les éléments du deuxième type.

Les éléments du premier type et les éléments du deuxième type peuvent être avantageusement en matériau synthétique, par exemple en matériau polymère, par exemple en polyamide.

De préférence, les étages sont divisées en au moins des cellules parallélépipédiques dont la hauteur, la largeur et la longueur sont sensiblement égales

De préférence également, les fonds au moins en partie perméable à l'hydrogène peuvent comporter du tissu filtrant en matériau polymère ou en métal

La présente invention a également pour objet un réservoir à hydrure comportant un réservoir selon l'invention contenant un matériau de stockage de l'hydrogène, par exemple un hydrure métallique.

La présente invention a également pour objet un véhicule automobile comportant un système de propulsion alimenté en hydrogène et un réservoir de stockage selon l'invention connecté au système de propulsion et des moyens pour chauffer le réservoir en phase de désorption.

### BRÈVE DESCRIPTION DES DESSINS

La présente invention sera mieux comprise à l'aide de la description qui va suivre et des dessins en annexes sur lesquels:
- la figure 1 est une vue en coupe longitudinale d'un premier exemple de réservoir selon l'invention,
- la figure 2 est une vue de détail de la figure1,
- la figure 3 est une vue en coupe d'un empilement élémentaire de la figure 1,
- la figure 4A est une vue en perspective isométrique de l'empilement élémentaire de la figure 3 en l'absence de la coupelle collectrice,
- la figure 4B est une vue en perspective isométrique de l'empilement élémentaire de la figure 3 avec la coupelle collectrice,
- la figure 5A une vue de détail de la figure 1 représentée schématiquement illustrant le fonctionnement du réservoir,
- la figure 5B est une vue détail représentée schématiquement d'une variante de réalisation dans laquelle l'axe longitudinal du réservoir est orienté horizontalement,
- la figure 6 est une vue en coupe longitudinale d'un deuxième exemple de réalisation d'un réservoir selon l'invention représenté schématiquement,
- la figure 7 est une vue en coupe longitudinale d'une réalisation pratique du réservoir selon le deuxième exemple de réalisation dans une configuration horizontale,
- les figures 8A et 8B sont des vues de détail de la figure 7,
- la figure 9 est une représentation schématique d'un exemple d'une installation d'absorption/désorption comportant un réservoir selon l'invention.

### EXPOSÉ DÉTAILLÉ DE MODES DE RÉALISATION PARTICULIERS

Dans la suite de la description, les hydrures métalliques seront désignés par "matériau de stockage ".

Dans la description qui va suivre, le ou les réservoirs décrits présentent une forme cylindrique de révolution, qui représente le mode préféré de réalisation. Néanmoins tout réservoir formé par un élément creux présentant une dimension longitudinale plus grande que sa dimension transversale, et ayant une section quelconque, par exemple polygonale ou ellipsoïdale ne sort pas du cadre de la présente invention.

L'amont et l'aval sont à considérer selon le sens d'écoulement de l'hydrogène.

Les termes "inférieur" et "supérieur" sont à considérer par rapport à l'orientation des dessins. Comme nous le verrons par la suite, l'orientation des réservoirs peut être verticale, horizontale ou autre.

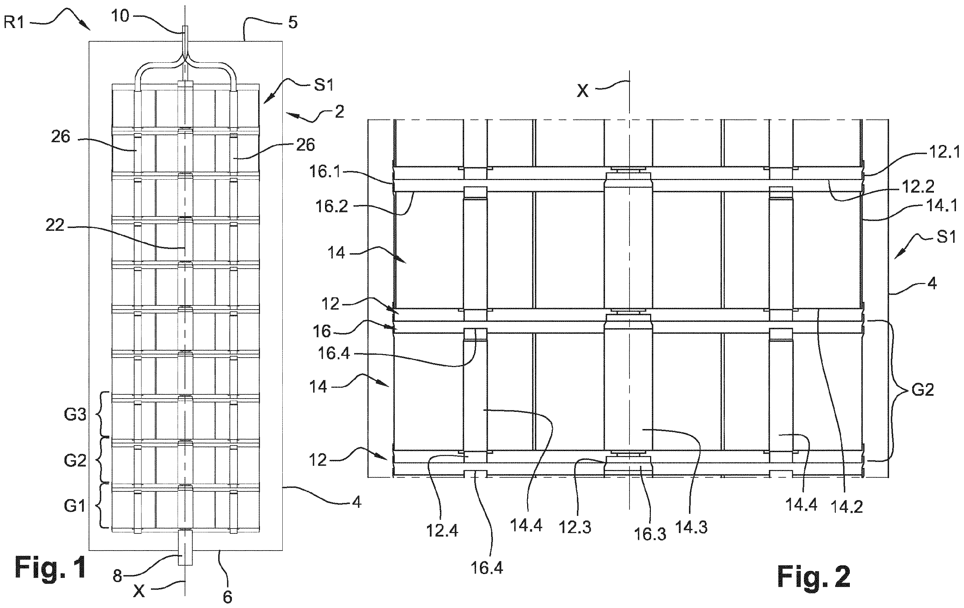

Sur les figures 1 à 5B, on peut voir un premier exemple de réalisation d'un réservoir R1 d'hydrogène selon l'invention comportant une enceinte 2 dans laquelle est stocké le matériau de stockage. L'enceinte est formée d'une virole 4 d'axe longitudinal X fermée à une extrémité supérieure par un fond supérieur 5 et fermée à une extrémité inférieure par un fond inférieur 6. La virole 4 est, dans l'exemple représenté, de section circulaire.

L'enceinte est destinée à tenir une certaine pression d'hydrogène, typiquement comprise entre 0,1 bar et 1000 bars.

Dans l'exemple représenté, le réservoir R1 comporte une entrée d'alimentation 8 en hydrogène réalisée dans le fond inférieur 6 et une sortie d'évacuation 10 de l'hydrogène réalisée dans le fond supérieur 5.

Le réservoir comporte une structure interne S1 assurant à la fois le confinement du matériau de stockage en hydrogène et la distribution et la collecte de l'hydrogène au sein du matériau. La structure interne comporte plusieurs étages G1, G2, G3... superposés le long de la direction X. Chaque étage comporte une première, une deuxième et une troisième zone disposées d'amont en aval.

Chaque zone est délimitée par une coupelle. La première zone est délimitée par une coupelle distributrice 12, la deuxième zone est délimitée par une coupelle de réception du matériau de stockage 14, désignée par la suite "coupelle à hydrure 14", et la troisième zone est délimitée par une coupelle collectrice 16.

Les coupelles 12, 14, 16 sont superposées et emboitées les unes dans les autres.

La coupelle à hydrure 14 est destinée à contenir le matériau de stockage M. Elle présente une forme cylindrique à section circulaire. Elle comporte une paroi latérale 14.1 étanche à l'hydrogène et au matériau de stockage, un fond inférieur 14.2 qui est au moins en partie perméable à l'hydrogène et étanche à la poudre de matériau de stockage, un conduit d'alimentation central traversant 14.3 aligné avec l'axe longitudinal X et au moins un conduit de collecte traversant 14.4 d'axe parallèle à l'axe longitudinal X.

Dans la présente demande, on considère qu'un élément est étanche à la poudre lorsque la masse de poudre perdue en passant à travers l'élément est inférieure à 1%.

La paroi latérale 14.1 et le fond 14.2 délimitent un volume destiné à contenir le matériau de stockage M. De manière avantageuse, le volume est cloisonné au moyen de cloisons 18 de sorte à délimiter avantageusement des cellules ayant un ratio proche de 1:1:1, i.e. une hauteur, une largeur et une longueur sensiblement égales. La gestion du phénomène de gonflement/dégonflement de la poudre hydrure bien connu dans le domaine du stockage d'hydrogène lors de l'absorption/désorption de l'hydrogène par l'hydrure est alors facilitée, contrairement aux contenants ayant un élancement trop important.

De préférence, la coupelle à hydrure 14 comporte plusieurs conduits de collecte 14.4, par exemple quatre conduits 14.4 dans l'exemple représenté, permettant une collecte uniforme de l'hydrogène sur toute la section transversale de la coupelle 14.

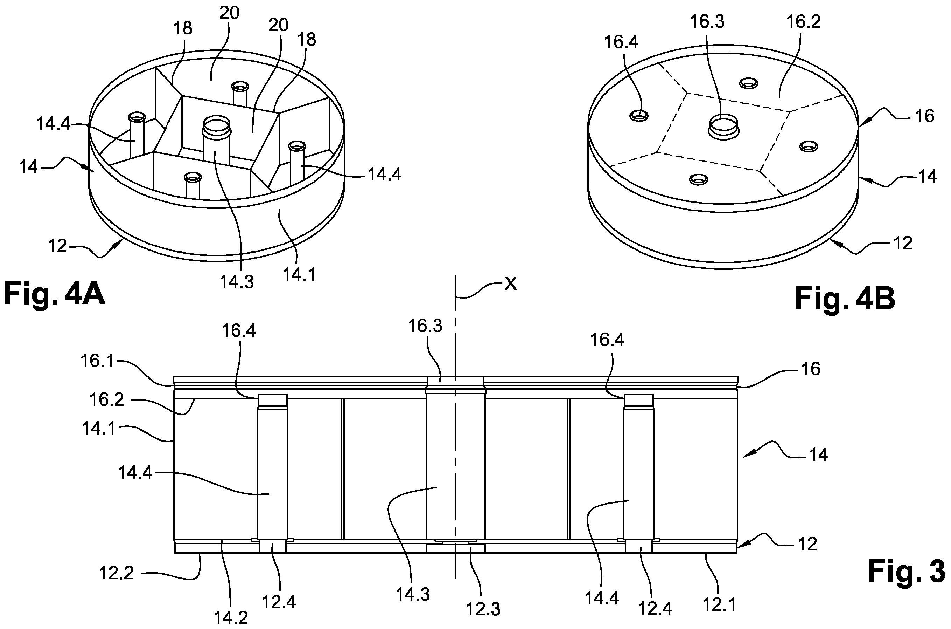

Dans l'exemple représenté sur la figure 4A, quatre cloisons 18 entourent le conduit central 14.3 et délimite une cellule 20 de section sensiblement carrée, et quatre cloisons 18 relient les quatre angles de la cellule 20 à la paroi latérale 14.1, délimitant quatre cellules périphériques 20. D'autres délimitations du volume peuvent être envisagées.

Le fond inférieur 14.2 de la coupelle à hydrure 14 est par exemple formé par un tissu en polymère ou en métal permettant de retenir la poudre du matériau de stockage mais laissant passer l'hydrogène.

La coupelle collectrice 12 qui est disposée en amont de la coupelle à hydrure 14 et en particulier en amont du fond inférieur 14.2 de la coupelle à hydrure; comporte une paroi latérale 12.1 et un fond inférieur 12.2 qui sont tous les deux étanches à l'hydrogène.

Le fond inférieur comporte un orifice d'alimentation 12.3 formé au centre du fond inférieur 12.2 et au moins un conduit de collecte 12.4. Le tube de collecte 12.4 est disposé dans le fond inférieur 12.2 de sorte que, lorsque la coupelle à hydrure 14 est montée sur la coupelle distributrice 12, chaque conduit de collecte 12.4 soit aligné avec un conduit de collecte 14.4. De préférence, la coupelle distributrice 12 comporte autant de conduits de collecte 12.4 que de conduits de collecte 14.4. La connexion entre un conduit de collecte 12.4 et un conduit de collecte 14.4 est étanche à l'hydrogène.

La coupelle collectrice 16 disposée en aval de la coupelle à hydrure 14 comporte une paroi latérale 16.1, un fond inférieur 16.2, un conduit central 16.3 et au moins un orifice de connexion 16.4. L'orifice de connexion 16.4 est formé dans le fond inférieur 16.2 de sorte que, lorsque la coupelle collectrice 16 est montée sur la coupelle à hydrure 14, chaque orifice de connexion 16.4 soit aligné avec un conduit de collecte 14.4. La connexion entre un conduit de collecte 14.4 et l'orifice de connexion 16.4 est étanche à l'hydrogène.

La coupelle collectrice 16 comporte autant d'orifices de connexion 16.4 que de conduits de collecte 14.4 et 12.4.

Le fond inférieur 16.2 est perméable à l'hydrogène et étanche à la poudre de matériau de stockage de sorte à éviter que la poudre soit emportée avec le flux d'hydrogène.

La paroi latérale 16.1 est étanche à l'hydrogène.

Les fonds inférieurs 12.2, 14.2 et 16.2 ont sensiblement le même diamètre extérieur. De préférence, la paroi latérale 12.1 de la coupelle distributrice 12 comporte une extrémité libre évasée permettant l'emboitement du fond de la coupelle à hydrure 14. De préférence, la paroi latérale 14.1 de la coupelle à hydrure 14 comporte une extrémité libre évasée permettant l'emboitement du fond de la coupelle collectrice 16. De préférence également, la paroi latérale 16.1 de la coupelle collectrice 16 comporte une extrémité libre évasée permettant l'emboitement du fond de la coupelle distributrice 12 de l'étage supérieur. En outre, les parois latérales des coupelles 12, 14, 16 présentent une dimension le long de l'axe X supérieure à celles des canaux d'alimentation et des canaux de collecte pour permettre l'emboîtement.

De préférence, les extrémités libres évasées des trois coupelles ont sensiblement les mêmes diamètres extérieurs.

Les parties étanches sont par exemple en tôlerie. Les conduits de collecte et d'alimentation sont par exemple solidarisés par sertissage. La solidarisation entre les parties étanches et les parties perméables à l'hydrogène est par exemple réalisée par emboîtement. En variante, les parties étanches peuvent être réalisées en polymère, par exemple en polyamide.

La coupelle à hydrure peut par exemple être réalisée en collant ou soudant un tissu filtre sur une plaque percée de trous ou en disposant un tissu filtre entre deux plaques percées de trous, les trous des deux plaques coïncidant.

L'assemblage des coupelles va être décrit.

La coupelle d'hydrure 14 est emboitée dans la coupelle distributrice 12 de sorte que l'orifice d'alimentation 12.3 soit aligné avec le conduit d'alimentation 14.3 et le conduit de collecte 12.4 soit aligné avec l'orifice de collecte 14.4.

Ensuite la coupelle collectrice est emboîtée dans l'extrémité libre de la coupelle à hydrure 12 de sorte que le conduit d'alimentation 16.3 soit alignés avec le conduit d'alimentation 14.3 et l'orifice d'alimentation 12.3 et de sorte que l'orifice de connexion 16.4 soit aligné avec les conduits de collecte 14.4 et 12.4. Le fond inférieur 16.2 de la coupelle collectrice 16 forme sensiblement un couvercle pour la coupelle à hydrure 14.

Les coupelles sont avantageusement montées serrées les unes dans les autres de sorte à assurer un emboîtement sensiblement étanche à l'hydrogène pour éviter les fuites vers l'extérieur de la structure interne. La mise en œuvre de joints d'étanchéité peut alors être évitée. En variante, l'ajustement entre les coupelles pourrait ne pas être serré et des joints d'étanchéité seraient utilisés.

Le matériau de stockage est mis en place dans la coupelle à hydrure 14 avant la mise en place de la coupelle de collecte 16. Nous rappelons que la poudre d'hydrure gonfle à l'absorption de l'hydrogène et dégonfle à la désorption. Afin d'éviter que les coupelles d'hydrure ne subissent de trop fortes sollicitations lors du gonflement, il est préférable de ne pas remplir entièrement le volume réservé au matériau hydrure. Ce volume n'est donc pas entièrement occupé par le matériau, et il se forme généralement une surface libre.

Cet empilement est représenté sur les figures 3, 4A et 4B.

Chaque étage peut être assemblé séparément puis les étages peuvent être emboités les uns dans les autres ou alors les coupelles sont empilées et emboîtées les unes dans les autres au fur et à mesure de l'assemblage de la structure interne. La structure des coupelles du premier exemple de réalisation permet de n'utiliser que trois types de coupelle pour réaliser toute la structure interne.

En variante, on pourrait envisager que les étages soient réalisées séparément par emboîtement et qu'ils soient assemblées les uns aux autres autrement que par emboîtement.

Lorsque tous les étages sont assemblés, la structure interne comporte sur toute sa hauteur un canal d'alimentation principal central 22 muni d'ouvertures latérales 24 débouchant dans les coupelles distributrices 12. La structure interne comporte au moins un conduit de collecte 26, avantageusement plusieurs conduits de collecte 26 sur toute la hauteur de la structure interne, le conduit de collecte 26 comportant des ouvertures latérales 28 débouchant dans les coupelles de collectes 16. Les conduits d'alimentation principal 22 et des conduits de collecte 26 sont visibles sur la figure 2.

Le canal d'alimentation principal 22 comporte une extrémité longitudinale ouverte 22.1 par lequel le canal 22 est alimenté en hydrogène, l'extrémité inférieure dans l'exemple représenté.

L"entrée d'alimentation 8 est destinée à être connectée à une source d'hydrogène sous pression. L'hydrogène injecté dans le réservoir va autour de l'empilement, dans la virole 4, pour équilibrer les pressions de part et d'autre des parois 12.1, 14.1, 16.1. Le canal d'alimentation principal 22 comporte également une extrémité longitudinale 22.2 fermée, par exemple par un bouchon 23, forçant ainsi l'hydrogène à s'écouler dans les coupelles distributrices par les ouvertures 24.

Les conduits de collecte 26 comportent une extrémité longitudinale connectée à la sortie d'évacuation 10 et une extrémité longitudinale opposée obturée par des bouchons.

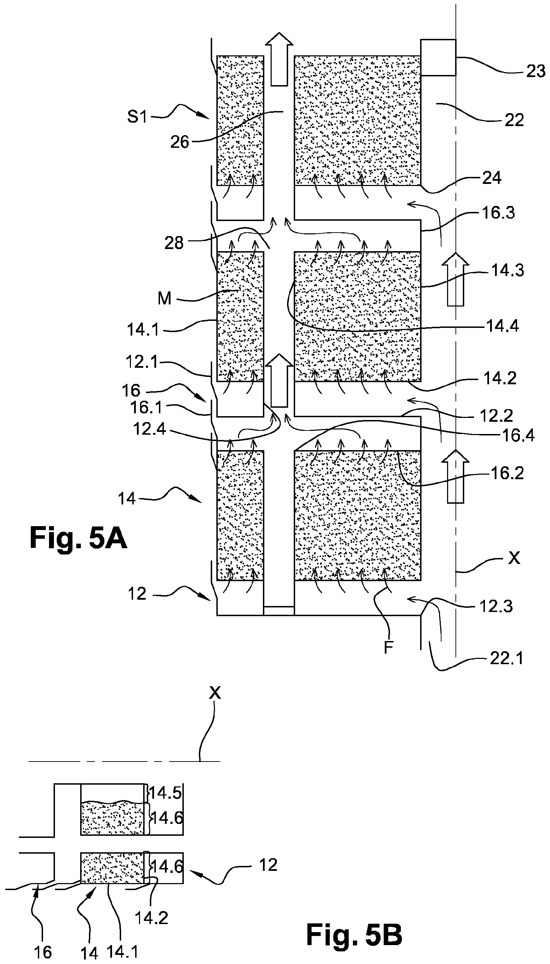

Le réservoir de la figure 1 peut être utilisé avec son axe longitudinal X vertical comme cela est représenté sur la figure 1. Il peut également être utilisé avec son axe longitudinal X orienté horizontalement ou toute autre orientation intermédiaire. Dans une orientation horizontale, le fond du lit de poudre est formé par une partie de la paroi latérale 14.1 de la coupelle à hydrure 14 et les cloisons 18. Comme cela est schématique sur la figure 5B, une partie supérieure du fond 14.2 désignée 14.5 n'est alors pas en contact avec de la poudre. Afin d'éviter de court-circuiter le matériau de stockage, seule la partie 14.6 du fond en contact avec le matériau de stockage est rendue perméable à l'hydrogène. On peut envisager que la zone perméable 14.6 présente une perméabilité uniforme sur toute sa surface ou alors présente une perméabilité diminuant graduellement en direction de la surface libre du matériau.

Le fonctionnement du réservoir de la figure 1 va maintenant être décrit à l'aide de la figure 5A, l'axe longitudinal X étant orienté verticalement.

En phase de stockage, i.e. d'absorption de l'hydrogène par l'hydrure, de la chaleur doit être extraite du réservoir pour ne pas ralentir la cinétique d'absorption, de l'hydrogène refroidi est introduit dans le réservoir, par exemple entre -50°C et 400°C. L'hydrogène alimente le réservoir par l'entrée d'alimentation 8, le débit est tel qu'il permet, pour une part, de fournir l'hydrogène qui sera stocké dans l'hydrure et, pour une autre part, de fournir le flux de caloporteur permettant d'extraire les calories de l'hydrure.

Le flux d'hydrogène, symbolisé par les flèches F, s'écoule dans le conduit d'alimentation principal 22 puis dans chacune des coupelles distributrices 12 via les ouvertures latérales 24. Les fonds inférieurs 12.2 des coupelles distributrices 12 étant étanches à l'hydrogène, ainsi que les parois latérales 12.1 et les fonds inférieurs 14.2 des coupelles à hydrure étant perméables à l'hydrogène, l'hydrogène traverse les fonds inférieurs 14.2 des coupelles à hydrure 14. Le passage de l'hydrogène se fait de manière répartie et homogène à travers le fond inférieur 14.2. L'hydrogène percole ensuite dans le milieu poreux formé par la poudre d'hydrure sur toute son épaisseur puis ressort à travers le fond inférieur 16.2 des coupelles collectrices 16. Il est rappelé que les parois latérales 14.1 sont également étanches à l'hydrogène.

Le fond inférieur 12.2 de la coupelle distributrice 12 de l'étage supérieur étant étanche à l'hydrogène, l'hydrogène collecté à l'étage inférieur circule dans les conduits de collecte 26 et sort ensuite par la sortie d'évacuation 10. La quantité d'hydrogène collectée est moindre que celle injectée du fait de l'absorption et le flux d'hydrogène a vu sa température augmenter du fait des échanges thermiques.

En phase de déstockage, i.e. de désorption de l'hydrogène par l'hydrure, de manière préférée on prévoit un réchauffage de l'hydrure par l'extérieur, par exemple au moyen d'une résistance entourant la virole ou d'un circuit de caloporteur, comme cela sera décrit ci-dessous.

Néanmoins, on peut envisager d'injecter de l'hydrogène chauffé dans le réservoir, par exemple entre 0°C et 500°C. La circulation de l'hydrogène est identique à celle en phase de stockage. La quantité d'hydrogène collectée est supérieure à celle injectée du fait de la désorption et le flux d'hydrogène a vu sa température diminuer du fait des échanges thermiques.

La distribution d'hydrogène à chaque étage et la collecte d'hydrogène à chaque étage se font donc en parallèle.

On obtient une circulation de caloporteur au cœur même du matériau de stockage assurant ainsi un chauffage ou un refroidissement au cœur du matériau de stockage. La cinétique de réaction est donc améliorée.

En outre, l'hydrogène est distribué de manière homogène à tous les étages de la structure interne, et à sensiblement la même température. Par conséquent, les réactions d'absorption et de désorption présentent une cinétique sensiblement identiques à tous les étages de la structure, contrairement un réservoir dans lequel c'est le même caloporteur qui circule à travers tous les étages.

Par ailleurs, la poudre du matériau de stockage est confinée entre les coupelles à hydrure et les coupelles de collecte évitant que la poudre soit entraînée par le flux d'hydrogène.

A titre d'exemple, pour une application embarquée par exemple dans un tracteur, le diamètre des coupelles peut être égal à 200 mm. Les éléments 12 et 16 mesurent 4 mm de hauteur. Les éléments 14 mesurent 60 mm de hauteur. Par exemple 15 coupelles sont empilées.

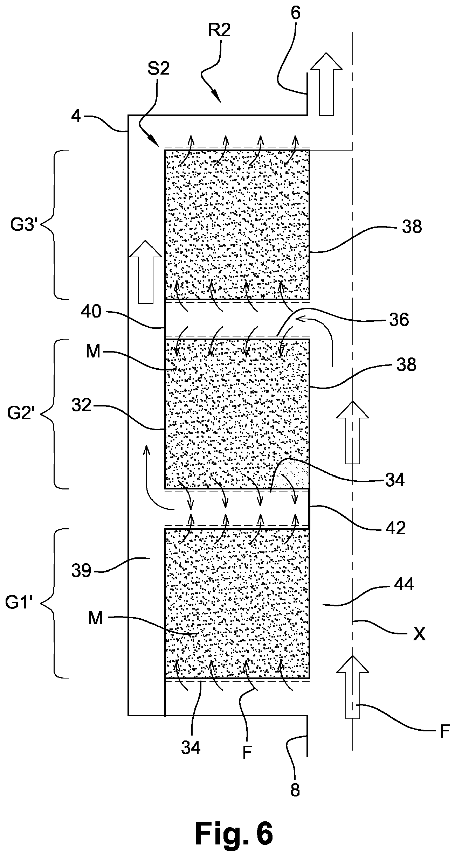

Sur les figures 6 à 8B, on peut voir un autre exemple de réalisation d'un réservoir R2 qui diffère de celui des figures 1 à 5B en ce que la collecte générale de l'hydrogène se fait entre la structure interne et la face intérieure de la virole.

La structure interne S2 comporte également plusieurs étages G1', G2', G3',... superposés le long de l'axe longitudinal X. une zone de distribution 30 est prévue entre deux étages et tous les deux étages de sorte qu'une zone de distribution distribue l'hydrogène dans deux étages simultanément. Une zone de collecte 30 est prévue entre deux étages tous les deux étages, de sorte qu'une zone collectrice 30 collecte l'hydrogène de deux étages simultanément.

Dans la représentation de la figure 6, chaque étage comporte une paroi latérale 32, un fond inférieur 34, un fond supérieur 36 et un conduit central 38. La paroi latérale 32 et le conduit central sont étanches à l'hydrogène et les fonds inférieur 34 et supérieur 36 sont au moins en partie perméables à l'hydrogène et étanches à la poudre du matériau de stockage.

Les parois latérales définissent avec la virole un canal collecteur 39.

Le fond supérieur 36 d'un étage est maintenu à distance d'un fond inférieur 34 de l'étage supérieur pour délimiter soit une zone collectrice soit une zone distributrice.

Chaque zone distributrice comporte une paroi latérale 40 entre deux étages successifs et chaque zone collectrice comporte une paroi cylindrique 42 entre deux étages successifs.

Ainsi, la structure interne comporte un conduit central principal d'alimentation 44 comportant des orifices 46 débouchant dans les zones distributrices tous les deux étages, et la structure interne comporte des orifices de collecte 48 débouchant dans le canal collecteur 39.

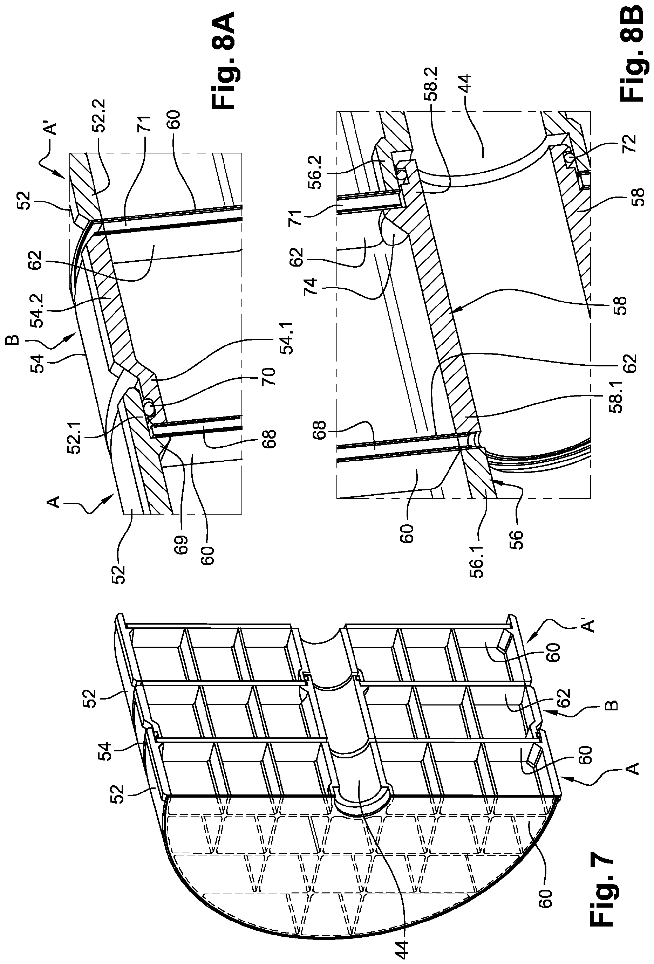

Sur les figures 7 et 8A et 8B, on peut voir un exemple de réalisation pratique du réservoir de la figure 6.

De manière avantageuse, chaque étage est compartimenté en cellules, par exemple de section parallélépipédiques pour la plupart. Avantageusement le ratio 1:1:1 entre les différentes dimensions des cellules est respecté.

Dans l'exemple représenté, la structure interne S2 comporte un empilement d'au moins deux éléments distincts A et B s'emboîtant l'un dans l'autre de sorte à obtenir une alternance d'orifices d'alimentation du côté du conduit central et d'orifices de collecte du côté du canal collecteur 39.

L'élément A comporte une paroi radialement extérieure 52 dont une première extrémité longitudinale 52.1 coopère de manière étanche avec une première extrémité longitudinale 54.1 de la paroi radialement extérieure 54 de l'élément B. L'élément A comporte une paroi radialement intérieure 56 qui coopère avec une paroi radialement intérieure 58 de l'élément B, de sorte à ménager entre une première extrémité longitudinale 56.1 de la paroi radialement intérieure 56 et une première extrémité longitudinale 58.1 de la paroi radialement intérieure 58 en regard de l'extrémité 56.1, un jeu permettant à l'hydrogène s'écoulant dans le conduit central d'accéder à une zone de distribution ménagée entre deux fonds en regard des éléments A et B.

L'élément A comporte des fonds 60 et l'élément B comporte des fonds 62 au moins en parties perméables à l'hydrogène et étanches à la poudre du matériau de stockage. Les fonds sont par exemple réalisés en tissu filtrant, celui-ci est par exemple collé ou thermo soudé sur les pièces 52 et 54.

De manière avantageuse, une pièce 68 épaisse, rigide et perméable à l'hydrogène est disposée dans la zone de distribution. Elle permet de conserver l'épaisseur de la zone de distribution en formant une entretoise entre les fonds 60, 62 des éléments A et B de sorte à maintenir la circulation de l'hydrogène. En outre sa rigidité permet de protéger le tissu filtrant des fonds contre le gonflement du matériau de stockage.

La pièce 68 peut être en matériau fritté poreux, en un matériau poreux ou comporter une ou plusieurs grilles en matériau synthétique, type polymère ou en métal, ou de la mousse ou matériau fritté à porosité ouverte. La pièce 68 peut ne pas être étanche à la poudre puisque les fonds des éléments retiennent la poudre. En variante, le tissu filtrant pourrait être omis, la pièce 68 est alors configurée pour retenir la poudre et être perméable à l'hydrogène, et pour garantir l'étanchéité à la poudre au niveau des contacts avec les pièces 52 ou 54.

Dans l'exemple représenté, la pièce 68 est reçue entre un épaulement 69 formé dans la face interne de la paroi radialement externe 52 de l'élément A et la première extrémité 54.1 de l'élément B et entre les extrémités 56.1 et 58.1.

Un joint d'étanchéité 70, par exemple un joint torique, peut avantageusement être prévu entre les premières extrémités 52.1 et 54.1 pour confirmer l'étanchéité. Dans l'exemple représenté le joint 70 est monté dans une gorge de la première extrémité 54.1.

Les deuxièmes extrémités longitudinales des éléments A et B, opposées à celles du côté de la zone de distribution, permettent à l'hydrogène de sortir des éléments A et B après avoir traversé le matériau de stockage M.

Dans le cas d'un empilement de deux éléments A et B, les deux éléments sont alimentées en hydrogène par la zone de distribution et l'hydrogène est évacué par les extrémités longitudinales libres des éléments A et B.

Dans le cas d'un empilement de plus de deux éléments A et B, par exemple de deux éléments A, et d'un élément B (le deuxième élément A sera désigné A' à des fins de clarté) comme cela est représenté sur les figures 6 à 8B, la deuxième extrémité longitudinale 54.2 de la paroi radialement extérieure de l'élément B opposée à la première extrémité longitudinale 54.1 coopère avec une deuxième extrémité 52.2 de la paroi radialement extérieure d'un élément A'. Un espace est ainsi ménager entre les deuxièmes extrémités longitudinales 54.2, 52.2 et à zone de collecte et d'évacuation est délimitée entre les fonds des éléments. Les deuxièmes extrémités 56.2, 58.2 de parois radialement intérieures coopèrent de manière étanche. Un joint d'étanchéité 72, par exemple un joint torique, peut avantageusement être prévu pour confirmer l'étanchéité. Dans l'exemple représenté, le joint 72 est monté dans une gorge de la deuxième extrémité 58.2 de la paroi radialement interne 58 de l'élément B.

Comme pour la zone de distribution, une pièce 71 épaisse et rigide perméable à l'hydrogène peut être disposée dans la zone de collecte et d'évacuation. Elle permet de conserver l'épaisseur de la zone de collecte et d'évacuation en formant une entretoise entre les fonds des éléments A et B de sorte à maintenir la circulation de l'hydrogène. En outre sa rigidité permet de protéger le tissu filtrant des fonds contre le gonflement du matériau de stockage.

La pièce 71 peut être en un matériau poreux, en matériau fritté poreux ou comporter une ou plusieurs grilles en matériau synthétique, type polymère ou en métal ou de la mousse. La pièce 71 peut ne pas être étanche à la poudre puisque les fonds 60, 62 des éléments A et B retiennent la poudre. Comme pour la pièce 68, la pièce peut être configurée pour pouvoir omettre le tissu filtrant.

Dans l'exemple représenté, la pièce 71 est maintenue serrée entre un épaulement 74 formé dans la face interne de la paroi radialement interne 58 du deuxième élément B et la deuxième extrémité 56.2 de la paroi radialement interne 56 de l'élément A' et entre les extrémités des parois radialement internes de l'élément B et de l'élément A'.

L'empilement d'éléments A et B peut se poursuivre. La structure interne ainsi formée comporte des zones de distribution communes à deux éléments A et B et des zones de collecte et d'évacuation communes à deux éléments A et B sauf au niveau des extrémités.

Comme cela est schématisé sur la figure 6, le conduit central 44 est connecté par une extrémité à l'alimentation en hydrogène et est obturé à l'extrémité longitudinale opposée pour forcer l'hydrogène à pénétrer les zones de distribution.

Par exemple et de manière avantageuse, les éléments A, B, A' sont réalisés en matériau synthétique, tel que le polymère, par exemple en polyamide ce qui simplifie leur fabrication, par exemple par moulage.

Le fonctionnement du réservoir selon le deuxième exemple de réalisation va être décrit. Nous ne distinguerons pas la phase de charge et de décharge. L'écoulement est symbolisé par les flèches F.

Le conduit central est alimenté en hydrogène, l'hydrogène pénètre dans les zones de distribution entre deux cellules, il s'écoule dans la pièce 68 et s'écoule dans les cellules A et B, il percole à travers le matériau de stockage et s'évacue dans le canal périphérique via les zones de collecte et d'évacuation. Le canal périphérique est connecté à la sortie d'évacuation. Suivant qu'il s'agit de la charge ou de la décharge, l'hydrogène injecté a été préalablement refroidi ou chauffé.

Un réservoir selon le deuxième exemple de réalisation peut être fabriqué comme suit:
Tout d'abord des éléments A et B sont fabriqués par exemple par moulage, l'un des fonds formé de tissu filtrant peut être disposé dans les moules avant le moulage. Des joints 70, 72 sont ensuite mis en place sur l'élément B. Il sera compris que les joints pourraient être portés par l'élément A uniquement ou l'un par l'élément A et l'autre par l'élément B. Par ailleurs, on pourrait envisager que les joints soient surmoulés lors du moulage des éléments A et B.

Si l'empilement repose sur un élément A, l'élément A est rempli de poudre, la quantité de poudre mise en place tient compte du gonflement.

Ensuite, un tissu filtrant ferme l'extrémité ouverte de l'élément A. Le tissu filtrant peut être collé, thermocollé ou seulement posé, l'ensemble de l'empilement étant mis en compression par la suite, ce tissu étant alors plaqué contre la pièce A par la pièce 68. Puis une pièce 68 est disposée sur le tissu filtrant. Un élément B est ensuite disposé sur la pièce 68 et est emboité dans la paroi radialement extérieure de l'élément A. L'élément B est rempli de poudre. Un tissu filtrant ferme l'extrémité ouverte de l'élément B et une pièce 71 est disposée sur le tissu filtrant. Un autre élément A est emboité dans l'élément B et les étapes sont répétées jusqu'à atteindre le nombre d'étages souhaités.

L'extrémité longitudinale supérieure du conduit central est fermée de manière étanche à l'hydrogène. La structure interne ainsi formée est montée à l'intérieur de la virole et repose sur le fond inférieur. L'extrémité ouverte du conduit central 44 est connectée à l'entrée d'alimentation 8. Le canal périphérique 39 est connecté à la sortie d'évacuation 10.

A titre d'exemple uniquement, nous allons donner des valeurs de dimensions des éléments du réservoir R2. Les éléments A et B peuvent comporter des cellules parallélépipédiques de 1 cm à 20 cm de côté, contenant l'hydrure. Les pièces 68 et 71 ont par exemple une épaisseur comprise entre 0,2 mm à 10 mm. Le diamètre des éléments A et B est compris entre 20 mm et 500 mm, par exemple 200 mm. Le nombre d'éléments empilés peut être compris entre 2 et 100 éléments, typiquement 10.

Le réservoir selon le deuxième exemple permet une distribution en parallèle et quasi simultanée dans tous les éléments de l'hydrogène et un échange thermique avec l'hydrogène au cœur du matériau de stockage.

Dans les deux exemples décrits, les éléments et coupelles sont emboîtés mais il sera compris que l'on peut envisager de solidariser les éléments et coupelles entre eux, par exemple par des liaisons par encliquetage, par des liaisons baïonnettes voir par des moyens mécaniques externes. La structure interne peut alors être plus facilement manipulée.

Il sera compris que les deux exemples de réalisation peuvent être combinés. Par exemple on peut envisager dans le réservoir du premier exemple de réalisation que les coupelles de collecte 16 débouchent dans un canal périphérique, ce qui permettrait de supprimer les conduits de collecte traversant outs les étages.

Il peut être envisagé dans le premier exemple réalisation des conduits internes avec un volume distributeur commun et un volume collecteur commun à deux coupelles d'hydrure.

En outre dans les deux exemples de réalisation le sens d'écoulement de l'hydrogène peut être inversé. Dans le premier exemple de réalisation, on pourrait alimenter par le haut et dans le deuxième exemple de réalisation on peut envisager d'alimenter par le canal périphérique et collecter par le conduit central.

Grâce à l'invention l'hydrogène traverse le volume d'hydrure et échange directement au contact des grains du matériau de stockage, ce qui réduit les gradients thermiques car la chaleur de réaction est conduite seulement sur la longueur d'un grain de poudre. En outre l'échange avec le gaz se fait sur une surface très grande, qui est la surface spécifique de la poudre.

Par exemple, pour des poudres dont les grains ont un diamètre inférieur à 0,1 mm on peut considérer que le gaz est localement à la même température que la poudre.

Par exemple, lors du remplissage du réservoir, les grains ont une taille comprise entre 0.1 µm et 5 mm. Au cours du fonctionnement, le cyclage en absorption désorption de l'hydrogène que conduit à un phénomène dit de décrépitation, c'est-à-dire que les grains se fragmentent naturellement en plus petits grains, le phénomène prenant place dans les premiers cycles d'hydruration et continue en s'amoindrissant petit à petit.

La taille d'équilibre des grains dépend du matériau hydrure, typiquement elle est micrométrique.

Lors du remplissage des réservoirs, on peut envisager d'utiliser des blocs d'hydrure qui vont se transformer en poudre au fur et à mesure des charges et décharge du fait du phénomène de décrépitation La cinétique du réservoir sera alors très lente au début et le réservoir ne sera utilisable qu'après un certain nombre de cycles, cette phase est couramment appelée phase d'activation.

Les hydrures métalliques mis en œuvre sont par exemple TiVCr TiVMn, LaNis, TiFe, TiCrMn, TiVCrMo, Mg₂Ni, TiFeMn, LiBH4+MgH2, NaAIH4, Mg, KSi,...

De plus, le matériau de stockage est placé dans une cellule perméable au gaz et imperméable à la poudre.

Par ailleurs, le système de distribution de l'hydrogène permettant d'atteindre tout le matériau de stockage est relativement compact.

Le deuxième exemple de réalisation présente l'avantage que l'hydrogène échauffé ou refroidi après avoir traversé le matériau de stockage circule à l'extérieur de l'empilement alors que selon le premier exemple il circule au sein de l'empilement dans les conduits de collecte. En outre, le système est simplifié puisque le nombre de pièces différentes est réduit. De plus, le réservoir selon le deuxième exemple est plus compact.

Le réservoir selon l'invention peut avantageusement être appliqué au stockage d'hydrogène embarqué sur des engins lourds, type tracteur.

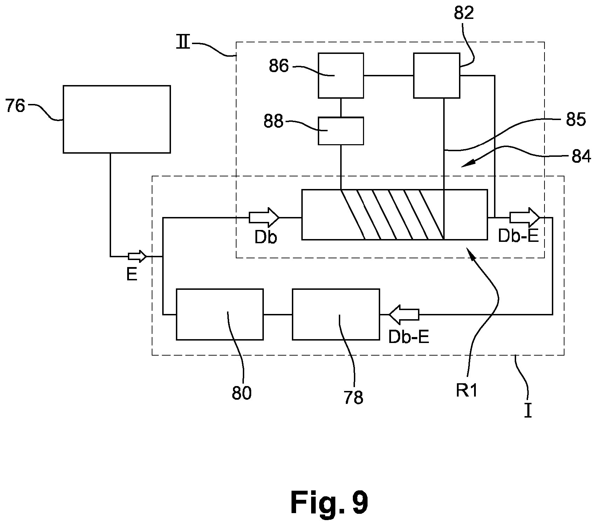

Sur la figure 9, on peut voir une représentation schématique d'un exemple d'installation permettant de charger le réservoir en hydrogène et permettant de décharger cet hydrogène par exemple vers une pile à hydrogène.

L'installation comporte le réservoir selon l'invention, par exemple le réservoir R1, une alimentation d'hydrogène à haute pression 76 connectée à l'orifice 8 du réservoir R1.

Elle comporte dans une première boucle d'absorption I un échangeur de chaleur 78 et une recirculation 80 connectés à la sortie du réservoir R1.

Elle comporte dans une deuxième boucle de désorption II un dispositif consommant l'hydrogène, par exemple une pile à combustible 82.

L'installation comporte également des moyens de chauffage 84 du réservoir. De manière avantageuse, ils sont formés par un fluide caloporteur échauffé par la pile à combustible en fonctionnement et un circuit 85 en contact avec l'enveloppe du réservoir R1 pour réchauffer les hydrures. Une pompe 86 est prévue pour la circulation du fluide caloporteur et un radiateur 88. Avantageusement, le fluide caloporteur est formé par de l'hydrogène.

La deuxième boucle II est par exemple embarquée sur un véhicule.

Le fonctionnement de l'installation est le suivant.

En phase d'absorption, un débit Db d'hydrogène froid rentre dans le réservoir R1; ce flux est dirigé vers les hydrures contenus dans le réservoir R1 ; une partie ε de l'hydrogène est absorbé par les hydrures qui chauffent ; la partie restante de l'hydrogène Db-ε se réchauffe au contact des hydrures et les refroidit, puis sort du réservoir R1. L'hydrogène passe ensuite dans l'échangeur de chaleur 78 pour être refroidi puis dans le circulateur 80 et recommence le circuit de la boucle I. Cette boucle I est alimentée en hydrogène par une alimentation à haute pression 76 pour compenser la part de gaz absorbée par les hydrures et pour augmenter la pression dans toute la boucle I. L'hydrogène est à la fois le fluide caloporteur et le gaz à stocker.

En phase de désorption, une fois le réservoir R1 en pression et les hydrures chargés d'hydrogène, le réservoir R1 est déconnecté de la boucle I pour alimenter la pile à combustible 82. La chaleur de la pile à combustible est dirigée vers le réservoir R1 pour fournir la chaleur de désorption par un fluide caloporteur liquide, puis vers le radiateur 88 puis vers une pompe 86.

## Revendications

1. Réservoir de stockage de l'hydrogène par absorption dans un matériau de stockage en poudre (M) de l'hydrogène, comportant :
- une enceinte (2),
- au moins une entrée d'alimentation en hydrogène (8),
- au moins une sortie d'évacuation l'hydrogène (10),
- une structure interne (S1, S2) pour stocker du matériau de stockage de l'hydrogène, ladite structure interne comportant un empilement selon un axe longitudinal (X) d'au moins deux étages (G1, G2, G3, G1', G2', G3') destinés à contenir du matériau de stockage (M),
chaque étage (G1, G2, G3, G1', G2', G3') comportant une zone de réception du matériau de stockage (M), une zone distributrice d'hydrogène et une zone collectrice d'hydrogène situées de part et d'autre de la zone de réception le long de l'axe longitudinal (X),
des moyens de distribution en parallèle de l'hydrogène dans les zones distributrices de sorte que, pour chaque étage (G1, G2, G3, G1', G2', G3'), un flux d'hydrogène circule de chaque zone distributrice vers la zone collectrice en traversant la zone de réception du matériau de stockage (M).

2. Réservoir de stockage selon la revendication selon 1, dans lequel les moyens de distribution de l'hydrogène dans les zones distributrices comportent un conduit de distribution (22, 44) connecté par une extrémité longitudinale à l'entrée d'alimentation (8) et fermé à une autre extrémité longitudinal, ledit conduit de distribution (22, 44) traversant ou bordant toutes les zones et comportant des ouvertures débouchant dans les zones distributrices.

3. Réservoir de stockage selon la revendication 1 ou 2, comportant des moyens connectant toutes les zones collectrices à la sortie d'évacuation.

4. Réservoir de stockage selon l'une des revendications 1 à 3, dans lequel chaque étage (G1, G2, G3) comporte sa zone distributrice et sa zone collectrice.

5. Réservoir de stockage selon la revendication 4, dans lequel chaque étage (G1, G2, G3) comporte une coupelle distributrice (12), une coupelle de réception (14) du matériau de stockage et une coupelle collectrice (16), lesdites coupelles distributrices (12), de réception (14) et collectrices (16) étant superposées dans cet ordre et solidarisées les unes aux autres de manière étanche, la coupelle de réception (14) étant avantageusement emboîtée serrée dans la coupelle distributrice (12) et la coupelle collectrice (16) est emboîtée serrée dans la coupelle de réception (14).

6. Réservoir de stockage selon la revendication 5, dans lequel les étages (G1, G2, G3) sont emboîtés serrés les uns dans les autres, la coupelle distributrice (12) d'un étage supérieur étant emboîtée serrée dans une coupelle collectrice (16) d'un étage inférieur et/ou dans lequel la coupelle distributrice (12) comporte un fond (12.2) étanche à l'hydrogène et une paroi latérale (12.1) étanche à l'hydrogène, dans lequel la coupelle de réception (14) comporte un fond (14.2) au moins en partie perméable à l'hydrogène et étanche au matériau de stockage en poudre (M) et une paroi latérale (14.1) étanche à l'hydrogène et dans lequel la coupelle collectrice (16) comporte un fond (16.2) au moins en partie perméable à l'hydrogène et une paroi latérale (16.1) étanche à l'hydrogène, les fonds au moins en partie perméable à l'hydrogène comportant avantageusement du tissu filtrant en matériau polymère ou en métal .

7. Réservoir de stockage selon la revendications 5 ou 6 en combinaison avec la revendication 3, dans lequel les moyens connectant les coupelles collectrices (16) à la sortie d'évacuation (10) comportent au moins un conduit de collecte longitudinal (26) traversant tous les coupelles et comportant des ouvertures (28) débouchant dans chacune des coupelles collectrices (16).

8. Réservoir de stockage selon la revendication 2 et la revendication 7, dans lequel le conduit de distribution (22) et/ou le conduit de collecte (16) comportent des sections de conduits appartenant aux coupelles distributrices (12), aux coupelles de réception (14) et aux coupelles collectrices (16), lesdites sections de conduits étant mises bout à bout lors de superposition des coupelles distributrices (12), des coupelles de réception (14) et des coupelles collectrices (16).

9. Réservoir de stockage selon l'une des revendications 1 à 3, comportant une zone distributrice pour deux étages (G1', G2', G3') et une zone collectrice pour deux étages (G1', G2', G3').

10. Réservoir de stockage selon la revendication 9, dans lequel les zones distributrices débouchent dans un conduit de distribution longitudinal (44) connecté à l'entrée d'alimentation (8) et dans lequel les zones collectrices débouchent dans un canal périphérique (39) délimité par l'enceinte (2) et la structure interne (S2), ledit canal périphérique (39) étant connecté à la sortie d'évacuation (10), avantageusement les zones distributrices débouchant dans un canal périphérique (39) délimité par l'enceinte (2) et la structure interne (S2), et les zones collectrices débouchant dans un conduit de distribution longitudinal (44) connecté à la sortie d'évacuation (10) ledit canal périphérique (39) étant connecté à l'entrée d'alimentation (8).

11. Réservoir de stockage selon la revendication 9 ou 10, dans lequel les zones distributrices et/ou les zones collectrices comportent une structure (68, 71) perméable à l'hydrogène et formant entretoise entre deux fonds de deux zones de réception successives, ladite structure (68, 71) étant avantageusement en un matériau poreux, une mousse, un fritté poreux ou comporte une ou plusieurs grilles.

12. Réservoir de stockage selon la revendications 10 ou 11 comportant un empilement dans lequel alternent des éléments d'un premier type d'élément (A) et des éléments d'un deuxième type d'élément (B), les éléments du premier type (A) et les éléments du deuxième type (B) étant solidarisés entre eux, les zones distributrices et les zones collectrices étant formées entre un élément du premier type et un élément du deuxième type, les éléments du premier type (A) et les éléments du deuxième type (B) comprenant avantageusement des parois latérales (52, 54) étanches à l'hydrogène et des fonds (60, 62) au moins perméables à l'hydrogène, les fonds au moins en partie perméable à l'hydrogène comportant avantageusement du tissu filtrant en matériau polymère ou en métal .

13. Réservoir de stockage selon la revendication 12, dans lequel les éléments du premier type (A) et les éléments du deuxième type (B) sont solidarisés les uns aux autres de manière étanche sauf au niveau des connexions entre les zones distributrices et le conduit de distribution (44) et des connexions entre les zones collectrices et le canal de collecte (39), les éléments du premier type (A) et les éléments du deuxième type (B) étant avantageusement emboîtés les uns dans les autres et des joints d'étanchéités (70, 72) sont prévus entre les éléments du premier type (A) et les éléments du deuxième type (B).

14. Réservoir de stockage selon l'une des revendications 11 à 13, dans lequel les éléments du premier type (A) et les éléments du deuxième type (B) sont en matériau synthétique, par exemple en matériau polymère, par exemple en polyamide.

15. Réservoir de stockage selon l'une des revendications 1 à 14, dans lequel les étages sont divisées en au moins des cellules parallélépipédiques dont la hauteur, la largeur et la longueur sont sensiblement égales.

16. Réservoir à hydrure selon l'une des revendications 1 à 15, contenant un matériau de stockage de l'hydrogène, par exemple un hydrure métallique.

17. Véhicule automobile comportant un système de propulsion alimenté en hydrogène et un réservoir de stockage selon la revendication 16 connecté au système de propulsion et des moyens pour chauffer le réservoir en phase de désorption.

## Patentansprüche

1. Tank zur Speicherung von Wasserstoff durch Absorption in einem pulverförmigen Wasserstoffspeichermaterial (M), umfassend:
- eine Hülle (2),
- wenigstens einen Eingang für die Versorgung mit Wasserstoff (8),
- wenigstens einen Ausgang für die Ausleitung von Wasserstoff (10),
- eine interne Struktur (S1, S2) zum Speichern von Wasserstoffspeichermaterial, wobei die interne Struktur entlang einer Längsachse (X) einen Stapel aus wenigstens zwei Stufen (G1, G2, G3, G1', G2', G3') umfasst, die dazu ausgelegt sind, Speichermaterial (M) zu enthalten,
wobei jede Stufe (G1, G2, G3, G1', G2', G3') eine Zone zur Aufnahme des Speichermaterials (M), eine Wasserstoffverteilzone und eine Wasserstoffsammelzone umfasst, die auf beiden Seiten der Aufnahmezone entlang der Längsachse (X) angeordnet sind,
Mittel zur parallelen Verteilung des Wasserstoffs in den Verteilzonen derart, dass für jede Stufe (G1, G2, G3, G1', G2', G3') ein Wasserstofffluss von jeder Verteilzone in Richtung der Sammelzone zirkuliert, wobei er die Zone zur Aufnahme des Speichermaterials (M) durchquert.

2. Speichertank nach Anspruch 1, bei dem die Mittel zur Verteilung des Wasserstoffs in den Verteilzonen eine Verteilleitung (22, 44) umfassen, die an einem Längsende mit dem Versorgungseingang (8) verbunden und an einem anderen Längsende geschlossen ist, wobei die Verteilleitung (22, 44) alle Zonen durchquert oder einfasst und Öffnungen umfasst, die in die Verteilzonen münden.

3. Speichertank nach Anspruch 1 oder 2, umfassend Mittel, die alle Sammelzonen mit dem Ausleitungsausgang verbinden.

4. Speichertank nach einem der Ansprüche 1 bis 3, bei dem jede Stufe (G1, G2, G3) ihre Verteilzone und ihre Sammelzone umfasst.

5. Speichertank nach Anspruch 4, bei dem jede Stufe (G1, G2, G3) eine Verteilschale (12), eine Schale (14) zur Aufnahme des Speichermaterials und eine Sammelschale (16) umfasst, wobei die Verteilschale (12), Aufnahmeschale (14) und Sammelschale (16) in dieser Reihenfolge überlagert und miteinander in dichter Weise verbunden sind, wobei die Aufnahmeschale (14) vorzugsweise fest in die Verteilschale (12) eingepasst ist, und die Sammelschale (16) fest in die Aufnahmeschale (14) eingepasst ist.

6. Speichertank nach Anspruch 5, bei dem die Stufen (G1, G2, G3) fest ineinander eingepasst sind, wobei die Verteilschale (12) einer oberen Stufe fest in eine Sammelschale (16) einer unteren Stufe eingepasst ist, und/oder wobei die Verteilschale (12) einen wasserstoffdichten Boden (12.2) und eine wasserstoffdichte Seitenwand (12.1) umfasst, wobei die Aufnahmeschale (14) einen Boden (14.2) umfasst, der wenigstens teilweise für Wasserstoff durchlässig und für das pulverförmige Speichermaterial (M) dicht ist, und eine wasserstoffdichte Seitenwand (14.1), und wobei die Sammelschale (16) einen Boden (16.2) umfasst, der wenigstens teilweise für den Wasserstoff durchlässig ist, und eine wasserstoffdichte Seitenwand (16.1), wobei die Böden, die wenigstens teilweise für den Wasserstoff durchlässig sind, vorzugsweise Filtergewebe aus Polymermaterial oder aus Metall umfassen.

7. Speichertank nach Anspruch 5 oder 6 in Kombination mit Anspruch 3, bei dem die Mittel, die die Sammelschalen (16) mit dem Ausleitungsausgang (10) verbinden, wenigstens eine Längssammelleitung (26) umfassen, die alle Schalen durchquert und Öffnungen (28) umfasst, die in jede der Sammelschalen (16) münden.

8. Speichertank nach Anspruch 2 und Anspruch 7, bei dem die Verteilleitung (22) und/oder die Sammelleitung (16) Leitungsabschnitte umfassen, die zu den Verteilschalen (12), den Aufnahmeschalen (14) und den Sammelschalen (16) gehören, wobei die Leitungsabschnitte während der Überlagerung der Verteilschalen (12), der Aufnahmeschalen (14) und der Sammelschalen (16) Ende an Ende platziert sind.

9. Speichertank nach einem der Ansprüche 1 bis 3, umfassend eine Verteilzone für zwei Stufen (G1', G2', G3') und eine Sammelzone für zwei Stufen (G1', G2', G3').

10. Speichertank nach Anspruch 9, bei dem die Verteilzonen in eine Längsverteilleitung (44) münden, die mit dem Versorgungseingang (8) verbunden ist, und bei dem die Sammelzonen in einen Umfangskanal (39) münden, der durch die Hülle (2) und die interne Struktur (S2) begrenzt ist, wobei der Umfangskanal (39) mit dem Ausleitungsausgang (10) verbunden ist, wobei vorzugsweise die Verteilzonen in einen Umfangskanal (39) münden, der durch die Hülle (2) und die interne Struktur (S2) begrenzt ist, und die Sammelzonen in eine Längsverteilleitung (44) münden, die mit dem Ausleitungsausgang (10) verbunden ist, wobei der Umfangskanal (39) mit dem Versorgungseingang (8) verbunden ist.

11. Speichertank nach Anspruch 9 oder 10, bei dem die Verteilzonen und/oder die Sammelzonen eine Struktur (68, 71) umfassen, die für den Wasserstoff durchlässig ist und ein Zwischenstück zwischen zwei Böden von zwei aufeinander folgenden Aufnahmezonen bildet, wobei die Struktur (68, 71) vorzugsweise aus einem porösen Material, einem Schaum, einem porösen Sintermaterial ist oder ein oder mehrere Gitter umfasst.

12. Speichertank nach Anspruch 10 oder 11, umfassend einen Stapel, in dem Elemente eines ersten Elementtyps (A) und Elemente eines zweiten Elementtyps (B) alternieren, wobei die Elemente des ersten Typs (A) und die Elemente des zweiten Typs (B) miteinander verbunden sind, wobei die Verteilzonen und die Sammelzonen zwischen einem Element des ersten Typs und einem Element des zweiten Typs gebildet sind, wobei die Elemente des ersten Typs (A) und die Elemente des zweiten Typs (B) vorzugsweise wasserstoffdichte Seitenwände (52, 54) umfassen und Böden (60, 62), die wenigstens für den Wasserstoff durchlässig sind, wobei die Böden, die wenigstens teilweise für den Wasserstoff durchlässig sind, vorzugsweise Filtergewebe aus Polymermaterial oder aus Metall umfassen.

13. Speichertank nach Anspruch 12, bei dem die Elemente des ersten Typs (A) und die Elemente des zweiten Typs (B) miteinander in dichter Weise verbunden sind, außer im Bereich von Anschlüssen zwischen den Verteilzonen und der Verteilleitung (44) und von Anschlüssen zwischen den Sammelzonen und dem Sammelkanal (39), wobei die Elemente des ersten Typs (A) und die Elemente des zweiten Typs (B) vorzugsweise ineinander eingepasst sind, und Dichtungen (70, 72) zwischen den Elementen des ersten Typs (A) und den Elementen des zweiten Typs (B) vorgesehen sind.

14. Speichertank nach einem der Ansprüche 11 bis 13, bei dem die Elemente des ersten Typs (A) und die Elemente des zweiten Typs (B) aus Kunststoffmaterial sind, beispielsweise aus Polymermaterial, beispielsweise aus Polyamid.

15. Speichertank nach einem der Ansprüche 1 bis 14, bei dem die Stufen wenigstens in parallelepipedförmige Zellen aufgeteilt sind, deren Höhe, Breite und Länge im Wesentlichen gleich sind.

16. Hydridtank nach einem der Ansprüche 1 bis 15, umfassend ein Wasserstoffspeichermaterial, beispielsweise ein Metallhydrid.

17. Automobilfahrzeug, umfassend ein mit Wasserstoff versorgtes Antriebssystem und einen Speichertank nach Anspruch 16, der mit dem Antriebssystem verbunden ist, sowie Mittel zum Heizen des Tanks in einer Desorptionsphase.

## Claims

1. Tank for storing hydrogen by absorption into a powder hydrogen-storage material (M), comprising:
- a vessel (2),
- at least one hydrogen feed inlet (8),
- at least one hydrogen discharge outlet (10),
- an inner structure (S1, S2) for storing hydrogen-storage material, said inner structure comprising a stack along a longitudinal axis (X) of at least two levels (G1, G2, G3, G1', G2', G3') for containing storage material (M),
each level (G1, G2, G3, G1', G2', G3') comprising a receiver zone for the storage material (M), a distributor zone for hydrogen and a collector zone for hydrogen situated on either side of the receiver zone along the longitudinal axis (X),
distribution means for distributing in parallel hydrogen in the distributor zones such that, for each level (G1, G2, G3, G1', G2', G3'), hydrogen flows from each distributor zone to the collector zone by passing through the receiver zone for the storage material (M).

2. Storage tank according to claim 1, in which the hydrogen distribution means in the distributor zones comprise a distribution pipe (22, 44) which is connected by a longitudinal end to the feed inlet (8) and is closed at another longitudinal end, said distribution pipe (22, 44) passing through or edging all the zones and comprising openings emerging in the distributor zones.

3. Storage tank according to claim 1 or 2, comprising means connecting all the collector zones to the discharge outlet.

4. Storage tank according to one of claims 1 to 3, in which each level (G1, G2, G3) comprises its distributor zone and its collector zone.

5. Storage tank according to claim 4, in which each level (G1, G2, G3) comprises a distributor cup (12), a receiver cup (14) for the storage material and a collector cup (16), said distributor cups (12), receiver cups (14) and collector cups (16) being stacked one on top of the other in this order and rigidly and sealingly connected to one another, said receiver cup (14) being advantageously tightly fitted into the distributor cup (12) and the collector cup (16) is tightly fitted into the collector cup (14).

6. Storage tank according to claim 5, in which the levels (G1, G2, G3) are tightly fitted into each other, the distributor cup (12) of an upper level being tightly fitted into a collector cup (16) of a lower level and/or in which the distributor cup (12) comprises a bottom (12.2) sealed to hydrogen and a lateral wall (12.1) sealed to hydrogen, in which the receiver cup (14) comprises a bottom (14.2) at least in part permeable to hydrogen and sealed to the powder storage material (M) and a lateral wall (14.1) sealed to hydrogen and in which the collector cup (16) comprises a bottom (16.2) at least in part permeable to hydrogen and a lateral wall (16.1) sealed to hydrogen, the bottoms at least in part permeable to hydrogen advantageously comprising filter cloth made of polymer material or metal.

7. Storage tank according to one of claims 5 or 6 in combination with claim 3, in which means connecting the collector cup (16) to the discharge outlet (10) comprise at least one longitudinal collector pipe (26) passing through all the cups and comprising openings (28) emerging in each of the collector cups (16).

8. Storage tank according to claim 2 and claim 7, in which the distribution pipe (22) and/or the collector pipe (16) comprise portions of pipes belonging to the distributor cups (12), to the receiver cups (14) and to the collector cups (16), said portions of pipes being placed end to end during the stacking one on top of the other of the distributor cups (12), the receiver cups (14) and the collector cups (16).

9. Storage tank according to one of claims 1 to 3, comprising one distributor zone for two levels (G1', G2', G3') and one collector zone for two levels (G1', G2', G3').

10. Storage tank according to claim 9, in which the distributor zones emerge in a longitudinal distribution pipe (44) connected to the feed inlet (8) and in which the collector zones emerge in a peripheral channel (39) delimited by the chamber (2) and the inner structure (S2), said peripheral channel (39) being connected to the discharge outlet (10), advantageously the distributor zones emerging in a peripheral channel (39) delimited by the chamber (2) and the inner structure (S2), and the collector zones emerging in a longitudinal distribution pipe (44) connected to the discharge outlet (10), said peripheral channel (39) being connected to the feed inlet (8).

11. Storage tank according to claim 9 or 10, in which the distributor zones and/or the collector zones comprise a structure (68, 71) permeable to hydrogen and forming a spacer between two bottoms of two successive receiver zones, said structure (68, 71) being advantageously a porous material, a foam, a porous sintered material or comprises one or more grids.

12. Storage tank according to one of claims 10 or 11, comprising a stack in which alternate elements of a first type of element (A) and elements of a second type of element (B), the elements of the first type (A) and the elements of the second type (B) being rigidly connected to one another, the distributor zones and the collector zones being formed between an element of the first type and an element of the second type, the elements of the first type (A) and the elements of the second type (B) advantageously comprising lateral walls (52, 54) sealed to hydrogen and bottoms (60, 62) at least permeable to hydrogen, the bottoms at least in part permeable to hydrogen advantageously comprising filter cloth made of polymer material or metal.

13. Storage tank according to claim 12, in which the elements of the first type (A) and the elements of the second type (B) are rigidly and sealingly connected to one another except at the level of the connections between the distributor zones and the distribution pipe (44) and the connections between the collector zones and the collector channel (39), the elements of the first type (A) and the elements of the second type (B) being advantageously fitted into each other and seals (70, 72) are provided between the elements of the first type (A) and the elements of the second type (B).

14. Storage tank according to one of claims 11 to 13, in which the elements of the first type (A) and the elements of the second type (B) are made of synthetic material, for example made of polymer material, for example polyamide.

15. Storage tank according to one of claims 1 to 14, in which the levels are divided into at least parallelepiped cells of which the height, the width and the length are substantially equal.

16. Hydride tank according to one of claims 1 to 15, containing a hydrogen-storage material, for example a metal hydride.

17. Automobile vehicle comprising a propulsion system fed with hydrogen and a storage tank according to claim 16 connected to the propulsion system and means for heating the tank in desorption phase.
